# EUROPÄISCHE PATENTANMELDUNG

(11) **EP 4 115 727 A1**
(43) Veröffentlichungstag der Anmeldung: **11.01.2023**
(21) Anmeldenummer: 22182710.8
(22) Anmeldetag: 03.07.2022
(51) Int. Cl.: A01G 13/02

(54) **SCHUTZELEMENT**

(30) Priorität: 04.07.2021 DE 202021103590 U; 04.07.2021 DE 202021103589 U
(71) Anmelder: Helm, Bernhard, 3434 Katzelsdorf (AT)
(72) Erfinder: Helm, Bernhard, 3434 Katzelsdorf (AT); Bauer, Jürgen, 85417 Marzling (DE)
(74) Vertreter: Baumann, Rüdiger Walter

(57) **Zusammenfassung**

Die Erfindung betrifft ein Schutzelement (1) zur Aufnahme einer Pflanze (2), insbesondere Holzpflanzen, wobei das Schutzelement (1) als im Wesentlichen zylindrischer Körper mit einer einen Aufnahmeraum (3) für die Pflanze definierenden Wandung (4) ausgebildet ist, die Wandung (4) aus einem zylindrisch verformbaren oder verformten Holzfurnier (5) oder aus verbundenen Holzfurnierstreifen (9) oder aus Holz, einem Holzwerkstoff oder einem anderen biologisch abbaubaren Material gebildet ist, wobei auf einer dem Aufnahmeraum zugewandten Innenseite (6) der Wandung (4) wenigstens ein Aufspannelement (19) und auf einer vom Aufnahmeraum abgewandten Außenseite (8) der Wandung (4) wenigstens ein Verbindungselement (17) vorgesehen ist, über die eine zylindrische Form des Schutzelementes (1) definierbar ist.

## Beschreibung

Die Erfindung betrifft ein Schutzelement für Pflanzen in Form eines im Wesentlichen zylindrischen Körpers, der die Pflanzen während der Aufwuchsphase gegen Umwelteinflüsse und insbesondere gegen Wildverbiss am Terminaltrieb schützt. Das Schutzelement kommt dabei vor allem in der Land- und Forstwirtschaft zum Einsatz.

Bekannte Schutzelemente aus Holz oder Kunststoffen werden eingesetzt, um Pflanzen beim Wuchs zu unterstützen, bis sie eine Größe erreicht haben, bei der sie gegen ein unerwünschtes Abfressen junger Triebe durch Wildtiere geschützt sind und ein sog. Verfegen, das heißt ein Scheuern von Geweihen an den Pflanzen diesen nicht mehr schaden können. Die aus dem Stand der Technik bekannten Schutzelemente aus Holz sind nur mit sehr großem Aufwand herstellbar und an einem Einsatzort aufstellbar. Darüber hinaus sind sie aufgrund zusätzlich verwendeter Befestigungs- und Verbindungsmittel aus Metall oder Kunststoff nicht vollständig biologisch abbaubar. Schutzelemente in Form von Kunststoffhüllen oder um die Pflanzen geschlungenen, spiraligen Kunststoffbändern sind in der Regel nicht oder nur unter bestimmten Bedingungen biologisch abbaubar. Alle aus dem Stand der Technik bekannten Lösungen müssen nach der Verwendungsphase mit großem Aufwand rückgebaut und/oder entsorgt werden.

Deshalb ist es eine Aufgabe dieser Erfindung, ein Schutzelement zur Verfügung zu stellen, das in einfacher Art und Weise herstellbar und am Einsatzort aufstellbar ist. Diese Aufgabe wird durch die Merkmale des unabhängigen Anspruchs gelöst. Vorteilhafte Weiterbildungen der Erfindung sind Gegenstand der abhängigen Ansprüche.

Das erfindungsgemäße Schutzelement dient zur Aufnahme einer Pflanze, insbesondere Holzpflanze. Besonders in der Wuchsphase direkt nach der Pflanzung sind die in der Regel ein- bis vierjährigen Pflanzen besonders anfällig für Umwelteinflüsse, die das Wachstum und die spätere Ausformung der Pflanze beeinflussen. Von besonderer Bedeutung ist hierbei der durch Wild verursachte Verbiss an den Terminalknospen der Pflanze. Ein Abbeißen dieses Pflanzenteils kann zum Ausfall der Pflanze oder zu signifikanten Wuchsbeeinträchtigungen der Pflanze führen. Ein besonderer Schutz während dieser Wachstumsphase ist daher von besonderer Wichtigkeit. Hinzu kommt, dass auch die Stämme älter Pflanzen gegen mechanische Verletzungen geschützt werden müssen, bis diese ausreichend robust sind.

Das Schutzelement ist als im Wesentlichen zylindrischer oder rohrförmiger Körper mit einem Aufnahmeraum für die Pflanze ausgebildet. Die Wandung des zylindrischen Körpers umgibt die Pflanze vollständig und schützt diese vor dem Zugriff durch das Wild und vor mechanischen Beschädigungen. Es ist des Weiteren vorgesehen, den zylindrischen Körper aus nahezu vollständig rückstandsfrei biologisch abbaubaren Materialien auszubilden. Das Schutzelement der vorliegenden Erfindung wird daher mit einer Wandung ausgebildet, die aus wenigstens einem zylindrisch verformbaren oder verformten Holzfurnier oder aus verbundenen Holzfurnierstreifen oder aus Holz oder einem Holzwerkstoff oder einem anderen biologisch abbaubaren Material gebildet ist. Auf einer dem Aufnahmeraum zugewandten Innenseite der Wandung ist wenigstens ein Aufspannelement vorgesehen und an der Außenseite der Wandung ist wenigstens ein Verbindungselement vorgesehen, über die eine zylindrische oder im Wesentlichen zylindrische Form des Schutzelementes definierbar ist.

Als vorteilhaft erweist es sich, wenn das Aufspannelement auf die Innenseite der Wandung einen nach außen gerichteten Druck und das Verbindungselement auf die Außenseite der Wandung einen zur Innenseite gerichteten Gegendruck in die Wandung einträgt. Durch dieses Zusammenspiel wird das Schutzelement aufgespannt und in seiner im Wesentlichen zylindrischen Form stabilisiert. Aufspannelement und Verbindungselement klemmen somit die Wandung ein.

Das Aufspannelement ist bevorzugt als ein eine definierte Rückstellkraft aufweisender, reversibel verformbarer Ring, Teilring, Reif oder Teilreif ausgebildet. Ebenfalls möglich ist es, das Aufspannelement als geschlossenen oder schließbaren Ring pder Reif auszubilden. Entscheidend ist, dass über den Ring, Teilring, Reif oder Teilreif ein für das Aufspannen und Stabilisieren des Schutzelementes ausreichender Druck erzeugt und ein Kollabieren des Schutzelementes verhindert wird. Als Teilring oder Teilreif ist in diesem Zusammenhang ein Gebilde zu verstehen, dessen umfangseitige Enden nicht mit einander verbunden sind und nur einen Teil eines Vollrings oder Vollreifs, d.h. einen Ringsektor von zwischen 1 und 359° abdecken. Zum Erreichen der Funktion der vorliegenden Erfindung werden oftmals Halbringe oder Halbreife oder Ringe bzw. Reife, die nur an bis zu 2/3 des Innenumfangs des Schutzelementes anliegen, verwendet, ohne die Erfindung hierauf zu beschränken. Die Enden der Teilringe oder Teilreife sind dabei verbunden. Ein Schließen des Schutzelements in die im wesentliche zylindrische Form erfolgt hauptsächlich durch das außenliegende Verbindungselement.

Günstiger Weise wird das Aufspannelement als flächiger, zu einem Ring, Teilring, Reif oder Teilreif verformbarer und aus einem Holzfurnier oder Holzwerkstoff ausgebildeter Abschnitt zur Verfügung gestellt. Dieser Abschnitt, der auch in Form eines Streifens oder Bandes herstellbar ist und sofern er aus Holz oder Holzmaterial besteht, weist im Holzmaterial eine Hauptfaserrichtung auf. Die Hauptfaserrichtung verläuft dabei im Wesentlichen senkrecht zu einer Längsachse des zylindrischen Körpers, d.h. die Hautfaserrichtung des Holzes oder Holzmaterials des Aufspannelementes ist bevorzugt querlaufend ausgerichtet. Bei der Verformung des Abschnittes zu einem Ring, Teilring, Reif oder Teilreif weisen diese aufgrund der Faserausrichtung die Bestrebung auf, in die flächige Form zurückzustellen. Über die dabei wirkenden Kräfte wird die Aufspannung des Aufspannelementes erreicht und der Gegendruck zu dem durch das Verbindungselement von außen in die Wandung eingetragenen Druck erzeugt.

In einer alternativen, vorteilhaften Weiterbildung des erfindungsgemäßen Schutzelement ist das Aufspannelement als flächiger Abschnitt aus einem vorzugsweise biodegradierbaren Kunststoff- oder Metallmaterial ausgebildet, wobei in dieser Ausführung das verwendete Material ebenfalls eine definierte Rückstellkraft aufweist und reversibel zu einem Ring, Teilring, Reif oder Teilreif verformbar ist.

Bevorzugt ist das Aufspannelement kraft- oder stoffschlüssig mit dem Holzfurnier oder den Holzfurnierstreifen, dem Holz oder Holzwerkstoff oder dem anderen biologisch abbaubaren Material der Wandung verbindbar. Zur Verbindung stehen dabei sämtliche dem Fachmann geläufigen Verbindungsmöglichkeiten zur Verfügung, wobei insbesondere ein Verklammern oder Verschrauben, jedoch auch eine einfache, bevorzugt auch die Rückstellkraft nutzende Steckverbindung, ein Aufkleben, Aufleimen oder Aufkaschieren möglich ist. Die Wandung definiert dabei den Anordnungsbereich des Aufspannelementes innenseitig am Schutzelement und dient gleichzeitig als Widerlager für die Rückstellkraft des Aufspannelementes. Hierdurch wird das Aufspannen der Wandung und damit die Ausbildung des zylindrischen oder im Wesentlichen zylindrischen Körpers erreicht.

Das Holzfurnier, die Holzfurnierstreifen und/oder der Holzfurnierabschnitt sowohl der Wandung wie auch des Aufspannelementes sind dabei bevorzugt aus Schälfurnier, Sägefurnier oder Messerfurnier, Sägedünnschnitt oder Mischungen daraus gebildet. Verwendet werden können auch schlechtere Furnierqualitäten oder Ausschussmaterial aus der Furnierherstellung.

Im erfindungsgemäßen Schutzelement weist das Holzfurnier, die Holzfurnierstreifen, das Holz oder der Holzwerkstoff der Wandung im Holzmaterial in einer bevorzugten Ausführungsform eine Hauptfaserrichtung auf. Diese Hauptfaserrichtung verläuft dabei bevorzugt im Wesentlichen parallel zu einer Längsachse des zylindrischen Körpers, d.h. die Faserrichtung ist im Wesentlichen längslaufend ausgerichtet. Technisch gesehen handelt es sich hier um ein längslaufendes Holzfurnier. Die im Wesentlichen längslaufende Ausrichtung der Fasern im Holzfurnier bzw. Holzmaterial, d.h. parallel zur Längsachse des zylindrischen Körpers ermöglicht zudem das Aufrollen des Holzfurniers zur Bildung der Wandung. Eine Rissbildung im Furniermaterial erleichtert das Aufstellen, insbesondere im Vergleich zu Holzfurnieren mit querlaufender Faserrichtung, d.h. mit Fasern, die hauptsächlich senkrecht zur Längsrichtung des Schutzelements ausgerichtet sind. Es sind sowohl längs- wie auch querlaufende Faserausrichtungen von der Erfindung umfasst und im erfindungsgemäßen Schutzelement verwendbar.

Somit kann ein Rückbau des Schutzelementes nach ausreichendem Aufwuchs der Pflanzen außerhalb des schädlichen Zugriffs durch das Wild unterbleiben. Da das Schutzelement derart ausgebildet ist, dass sämtliche Bestandteile weitgehend rückstandsfrei biologisch abbaubar sind, muss nur ein einmaliger Eingriff im Wald vorgenommen werden, um einen ausreichenden Schutz zu generieren. Die Verwendung eines Holzfurniers, erleichtert zudem die Erstellung des Schutzelementes, da aufwändige Arbeitsschritte, beispielsweise zur Konfektionierung der Bestandteile durch Zuschnitt, entfallen.

Zur Ausbildung der Wandung kann das Holzfurnier in einer einfachen Ausführung des Schutzelementes nach dem Aufrollen und dem Bilden des zylindrischen, rohrförmigen Körpers mit wenigstens einer umfangsseitigen, bevorzugt aus rückstandsfrei biologisch abbaubaren, pflanzlichen Materialien bestehenden Schnur oder Band dauerhaft, zumindest jedoch für die Dauer des Einsatzes, fixiert werden. Die Verwendung einer rückstandsfrei biologisch abbaubaren, aus einem pflanzlichen Materialien bestehenden Schnur oder eines solchen Bandes begünstigt die vorgenannten Vorteile des Schutzelementes der Erfindung weiter, da auch diese nach Abschluss der Schutzmaßnahme im Wald bzw. auf der Fläche verbleiben kann und nicht eingesammelt werden muss. Dem Band oder der Schnur kommt besondere Bedeutung zu, da über diese der Gegendruck gegen den Druck des Aufspannelementes in die Wandung eingetragen wird.

In der Erfindung ist auf der von dem Aufnahmeraum abgewandten Seite der Wandung, d.h. der Außenseite des Schutzelementes wenigstens ein Verbindungselement vorgesehen. Zusätzlich können ein oder mehrere Verbindungselement(e) ergänzend auch auf der Innenseite der Wandung aufgebracht werden. Das zusätzliche Verbindungselement unterstützt die Haltbarkeit des Schutzelementes und wirkt sich beim Aufrollen des Holzfurniers stabilisierend auf die Struktur des Holzes aus, da es beispielsweise einer Rissbildung entgegengewirkt und in der Holzstruktur auftretende Spannungen abträgt. Durch die Verbindungselemente wird die zylindrische oder in Wesentlichen zylindrische Form der Wandung vordefiniert und das Schutzelement geschlossen. Das Aufspannelement an der Innenseite der Wandung stabilisiert dann die zylindrische Form der Wandung und damit des Schutzelementes.

Als günstig erweist es sich, wenn das Verbindungselement als bandförmig, streifenförmig oder flächig ausgebildete Materiallage zur Verfügung gestellt wird. Das Verbindungselement ist dabei bevorzugt kraft- oder stoffschlüssig mit dem Holzfurnier, den Holzfurnierstreifen oder dem Holz oder Holzwerkstoff oder dem sonstigen Material der Wandung verbunden, insbesondere mit diesen verklammert, verschraubt, auf diese aufgesteckt, aufgeklebt, aufgeleimt oder aufkaschiert oder eingewebt. Zur biologischen Abbaubarkeit trägt bei, wenn die verwendeten Klebstoffe und oder Leime ebenfalls biologisch abbaubar sind oder zumindest bei Verbleib nach dem Zerfall des Schutzelementes keine negativen Umweltauswirkungen zeigen.

Das Verbindungselement wird bevorzugt aus einer insbesondere band- oder streifenförmigen oder flächigen Faser- oder Textilmatte oder einem Netz gebildet. Bereits die Anbringung eines oder mehrerer Streifen bewirkt eine wesentliche Unterstützung und begünstigt die Formhaltigkeit sowie Dauerhaftigkeit des Schutzelementes.

In einer bevorzugten Weiterbildung des erfindungsgemäßen Schutzelementes wird die Wandung aus mehreren nebeneinander liegend angeordneten Holzfurnierabschnitten, Stäben oder Ästen gebildet. Diese Holzmaterialien, deren jeweilige Hauptfaserrichtung ebenfalls parallel zur Längsachse des Schutzelementes ausgerichtet ist, sind über das Verbindungselement außen- und/oder innenseitig der Wandung miteinander verbunden.

Bei einer Kombination von netz- oder band- bzw. streifenförmig ausgebildeten Verbindungselementen mit aus Schälfurnieren gebildeten Holzfurnierblättern oder nebeneinander liegend angeordneten Holzfurnierabschnitten wird durch die Eigenspannung des Aufspannelementes und die gegenwirkende Kraft des Verbindungelementes das gesamte Schutzelement aufgespannt und ausgesteift..

Alternativ kann, wie ein einer vorteilhaften Weiterbildung der Erfindung vorgesehen, das Verbindungselement ringförmig ausgebildet werden und nach dem Aufrollen des Holzfurniers oder den Holzfurnierstreifen oder dem Holz oder Holzwerkstoff der Wandung mit der Außenseite der Wandung verbunden werden oder auf das aufgerollte Material aufgeschoben werden, um dessen Rücksprung in die flächige Form zu verhindern. Die Gegenkraft zur Rückstellkraft des Aufspannelementes wird dabei durch das ringförmig ausgebildete Verbindungselement zur Verfügung gestellt. Eine Fixierung des Verbindungselementes an der Wandung ist nicht zwingend erforderlich bzw. kann nur punktuell erfolgen.

Die Fixierung des Holzfurniers oder der verbundenen Holzfurnierstreifen oder dem Holz oder Holzwerkstoff oder dem sonstigen Material der Wandung in der zylindrischen Form und/oder die spätere Anbringung des Schutzelementes an einem Stützelement, beispielsweise einem Pflock, wird dadurch vereinfacht, dass das Verbindungselement, wie in einer vorteilhaften Weiterbildung der Erfindung vorgesehen, bezüglich eines Umfangs des zylindrischen Körpers ein Übermaß aufweist. Dabei ist wenigstens ein überstehendes Ende vorgesehen, das bevorzugt eine Schlaufe ausgebildet oder aufweist und zum Fixieren der Form und/oder zum direkten Verbinden mit dem Pflock, beispielsweise durch Anbinden, verwendet werden kann. Erfindungsgemäß ist somit vorgesehen, dass das Verbindungselement bezüglich eines Umfangs des zylindrischen Körpers ein Übermaß mit wenigstens einem überstehenden Bereich aufweist und der überstehende Bereich zum Fixieren einer Zylinderform des zylindrischen Körpers und/oder dessen Anordnung an einem Haltemittel für das Schutzelement verwendbar ist.

In einer als günstig angesehen Ausführungsform der Erfindung ist vorgesehen, dass das aufgerollte Holzfurnier, oder die verbundenen Holzfurnierstreifen oder das Holz oder der Holzwerkstoff der Wandung über gesondert zur Verfügung gestellte Verbinder in der zylindrischen Form fixierbar ist, wobei hierfür wenigstens ein ringförmig ausgeformter, insbesondere starrer Verbinder, beispielsweise ein vorkonfektionierter Furnierholzring, vorgesehen ist, der auf das aufgerollte Material der Wandung aufgesteckt wird. Der starre Verbinder liegt dann an der Außenseite der Wandung an und drückt diese nach innen. Von innen wird die Form des Schutzelementes durch das Aufspannelement stabilisiert.

Die Erstellung des erfindungsgemäßen Schutzelementes am Verbauungsort wird dadurch wesentlich vereinfacht, dass der zylindrische Körper durch Aufrollen des Holzfurniers, der Holzfurnierstreifen oder des Holzes oder Holzwerkstoffs der Wandung unter Ausbildung des Aufnahmeraums erstellt wird. Der so gebildete zylindrische Körper wird dann wie zuvor beschrieben fixiert. Dies kann beispielsweise durch über die Längsseiten der Wandung vorstehende Abschnitte oder Enden des Verbindungselementes oder über einfache Schnüre erfolgen, die um den zylindrischen Körper geschlungen und verknotet werden. Nach Aufrollen wird das Aufspannelement im Innern des Schutzelementes eingesetzt und drückt die Wandung aufgrund der Rückstellkraft gegen das Verbindungselement. Hierdurch wird ein stabiler, formhaltiger zylindrischer Körper zur Verfügung gestellt.

Logistisch wird die Ausbildung des Schutzelements am Verbauort dadurch vereinfacht, dass die Holzfurnierblätter oder Holzfurnierstreifen bzw. das Holz oder der Holzwerkstoff der Wandung, ggfs. mit aufgebrachtem Verbindungselement und/oder Aufspannelement flächig gestapelt angeliefert und an Ort und Stelle in die zylindrische Form gebracht werden.

Es ist bevorzugt vorgesehen, dass im fertigen Schutzelement über die Längsseiten des Holzfurniers verteilt mehrere vorstehende Abschnitte oder Enden des Verbindungselementes oder einfache Schnüre als Verbinder vorgesehen sind. Um eine zusätzliche Stabilisierung des zylindrischen Körpers und damit des gesamten Schutzelementes zu erreichen, können neben den vorstehenden Abschnitten oder Enden des Verbindungselementes oder den Schnüren auch aus Zweigen oder Zweigabschnitten geflochtene Reifen oder Ringe oder vorkonfektionierte Furnierholzringe, zusätzlich mit im Schutzelement eingefügt oder an diesem angeordnet werden.

Diese umschließen das Schutzelement entweder an der Außenseite oder sind innenseitig am zylindrischen Körper bzw. der Wandung angeordnet. Durch diese zusätzlichen Stabilisierungselemente, die, wie das gesamte Schutzelement, ebenfalls aus einem biologisch abbaubaren Material, bevorzugt einem Holz-, Ast- oder Zweigmaterial, gebildet sind, wird die Standfestigkeit und Formhaltigkeit des Schutzelementes begünstigt.

Das erfindungsgemäße Schutzelement ist, wie eingangs ausgeführt, dazu vorgesehen, eine Pflanze zu umgeben bzw. die Pflanze im Aufnahmeraum aufzunehmen. Als vorteilhaft wird in diesem Zusammenhang angesehen, wenn der zylindrische Körper einen Durchmesser von zwischen 9 cm und 50 cm, insbesondere von zwischen 11 cm und 25 cm, bevorzugt von 14 cm bis 16 cm aufweist. Die vorgenannten Durchmesser bzw. Durchmesserbereiche schaffen einen guten Ausgleich zwischen den Wuchsanforderungen seitens der Pflanze und zum anderen der Stabilität des gesamten Schutzelementes. Auch kann sich so im Inneren des Schutzelementes, d.h. im Aufnahmeraum ein für das Pflanzenwachstum günstiges Mikroklima ausbilden und auf die Lichtanforderungen der unterschiedlichen zu schützenden Pflanzen bzw. Baumarten reagiert werden, da sichergestellt ist, dass bei dem gewählten Umfangsmaß ausreichend Licht in den Aufnahmeraum einfällt, so dass die Pflanze optimale Wuchsbedingungen vorfindet. Licht dringt ebenfalls in der Ausführungsform mit aus Holzfurnierstreifen gebildeter Wandung vorteilhaft in den Innenraum ein, da zwischen den Streifen ein Abstand eingestellt werden kann, der den Lichteifall begünstigt, einen Durchgriff von Wild allerdings verhindert.

Wesentlicher Vorteil des erfindungsgemäßen Schutzelement es ist, dass dieses aus im Wesentlichen rückstandsfrei biologisch abbaubaren, pflanzlichen Materialien besteht. Als vorteilhaft wird in diesem Zusammenhang angesehen, wenn das verwendete Material von Wandung und Aufspannelement aus einem im Wesentlichen unbehandelten Holz gebildet ist. Als besonders günstig wird für die Wandung die Verwendung von Hölzern mit möglichst hoher Dauerhaftigkeit und guter Verfügbarkeit angesehen, insbesondere eignen sich Laubholzarten wie Pappel, Birke oder Buche. Für das Spannelement wird aufgrund der Holzstruktur die Verwendung von Birke, Buche oder Eiche empfohlen. Die Erfindung ist jedoch nicht auf die vorgenannten Holzarten beschränkt. Für die Herstellung der in der Erfindung eingesetzten Holzfurnierblätter werden insbesondere minderwertige Furnierqualitäten verwendet, da beispielsweise die dabei häufig anzutreffende Astigkeit den Einfall von Licht begünstigt.

Im Wesentlichen unbehandelt bedeutet im vorliegenden Fall, dass die verwendeten Materialien wie Holzfurnier, Holzfurnierstreifen, Holz oder Holzwerkstoffe ohne zusätzliche chemische oder physikalische Behandlung Verwendung finden können. Lediglich eine Imprägnierung mit bevorzugt ökologisch unbedenklichen Wachsen oder Ölen kann erfolgen, um die Dauerhaftigkeit des Materials zu unterstützen. Durch die geeignete Auswahl bzw. Kombination der gewählten Imprägniermittel kann die Verweildauer d.h. der Zeitraum bis zum vollständigen biologischen Abbau eingestellt bzw. beeinflusst werden.

Bevorzugt besteht auch das Verbindungselement aus überwiegend rückstandsfrei biologisch abbaubaren, pflanzlichen Materialien, insbesondere hergestellt auf Basis von Jute-, Hanf-, Sisal-, Kokos-, Baumwoll-, Holz- oder Leinfasern. Als günstig wird in diesem Zusammenhang angesehen, wenn die Schnur ebenfalls aus rückstandsfrei biologisch abbaubaren, pflanzlichen Materialien besteht.

Als günstig wird angesehen, wenn das für das Schutzelement verwendete Material, insbesondere Holzmaterial eine Materialstärke von zwischen 0,4 mm und 4,2 mm, bevorzugt von zwischen 0,5 mm und 2 mm aufweist, wobei die Materialstärke abhängt von der gewählten Herstellungsart sowie der verwendeten Material- bzw. Holzart. Die Verwendung stärkerer und schwächerer Materialien, insbesondere Furnieren und Sägedünnschnitt ist gleichermaßen von der Erfindung umfasst.

Bei Verwendung wird das Schutzelement in einer Ausführungsform erst am Verbauungsort aus vorkonfektioniertem Holzfurnier bzw. Holzfurnierstreifen hergestellt. Dies hat den Vorteil, dass eine größere Menge an Holzfurnieren oder Holzfurnierstreifen, beispielsweise gestapelt, am Verbrauchsort angeliefert und dort bedarfsweise die Schutzelemente aus den vereinzelten Holzfurnieren oder Holzfurnierstreifen gebildet werden können. Der logistische Aufwand verringert sich somit gegenüber der Anlieferung bereits vorkonfektionierter Schutzelemente wesentlich.

Alternativ hierzu kann das Schutzelement vorgefertigt an einen Verbauungsort angeliefert werden. Beispielsweise können die Holzfurniere oder -streifen bereits mit dem Verbindungselement verbunden sein, während das Aufspannelement nach Erstellung des im Wesentlichen zylinderförmigen Körpers in diesen eingesetzt wird. Alternativ können die Furniere oder Furnierstreifen auch mit dem Aufspannelement verbunden und das Verbindungselement nachträglich angebracht werden. In diesem Zusammenhang wird es als besonders günstig angesehen, wenn ein zylindrisch verformbares Schutzelement zur Verfügung gestellt wird.

In einer bevorzugte Weiterbildung der Erfindung und insbesondere bei der Verwendung stärkerer Furniere erweist es sich als vorteilhaft wenn das Holzfurnier eine oder mehrere Faltungskanten aufweist, an denen das Holzfurnier geschwächt oder eingekerbt ist und an denen das Holzfurnier zur Bildung eines zylindrischen, rohrförmigen Körpers biegbar ist. Hierzu werden die Faltungskanten in günstiger Weise als v-förmige Nuten ausgebildet, wobei die Nuten quer zur Hauptholzfaserrichtung eingebracht werden. Alternativ oder zusätzlich kann das Holzfurnier eingekerbt oder gestanzt werden, wodurch das Holzfurnier falt- oder biegbar ausgebildet wird.

In einer Ausführungsform der Erfindung werden getrennte Holzfurnierabschnitte nebeneinander liegend angeordnet und flächig miteinander verbunden. Die derart verbundenen Holzfurnierabschnitte bilden somit ein Holzfurnier im Sinne der vorliegenden Erfindung aus und können ebenfalls zur Bildung des zylindrischen, insbesondere rohrförmigen Körpers aufgerollt werden. Die Wandung weist in dieser Ausführungsform mehrere Segmente mit dazwischen liegenden Abständen auf.

Das Aufsteigen von Feuchtigkeit im Holzmaterial wird dadurch verringert, dass, wie in einer bevorzugten Weiterbildung der Erfindung vorgesehen, an wenigstens einem längsseitigen Ende des zylindrischen Körpers Aussparungen im Holzmaterial eingebracht sind, die im Einbauzustand eine bodenberührende Aufstandsfläche des zylindrischen Körpers reduzieren. Hierdurch kann auch die Lichtversorgung der Pflanze verbessert werden.

Die Einsatzdauer des Schutzelement sollte mindestens 2 Jahre betragen, bevor der biologische Abbauprozess die Wirksamkeit beendet.

Erfindungsgemäß ist vorgesehen, dass das Schutzelement bzw. der zylindrische Körper eine Länge von zwischen 0,4 m und 2 m, insbesondere von zwischen 0,5 m und 1,5 m aufweist. Eine Schutzelement der vorgenannten Länge stellt sicher, dass die Pflanzen während der Wuchsphase solange geschützt sind, bis diese nicht mehr durch verbeißendes Wild beschädigt oder zerstört werden können. Gleichzeitig garantiert die vorgenannte Länge, dass bei ausreichender Durchlüftung und Belichtung ein für das Pflanzenwachstum günstiges Mikroklima innerhalb des Schutzelementes vorliegt. Beispielsweise in Bereichen mit niedrigerem Wilddruck oder im Wein, Obst und Gartenbau können kürzere Schutzelemente verwendet werden.

Bei Verwendung des erfindungsgemäßen Schutzelementes ist bevorzugt die Anordnung des Schutzelementes an wenigstens einem benachbart zur Pflanze in den Boden eingesenkten Pflock vorgesehen. Selbstverständlich besteht hier auch die Möglichkeit, dass zwei und mehr Pflöcke Verwendung finden, je nach Bodenbeschaffenheit und Umweltbedingungen. Das Schutzelementes wird bevorzugt dadurch am Pflock befestigt, dass ein an dem zylindrischen Körper vorgesehenes oder anordenbares zusätzliches Verbindungselement vorgesehen ist oder die Verbindung über das bereits vorhandene Verbindungselement gebildet oder durch dieses zur Verfügung gestellt wird. So kann der Pflock beispielsweise durch wenigstens eine am Verbindungselement angeordnete oder durch dieses gebildete Schlaufe geführt werden. Alternativ können auch vor Ort freien Enden des Verbindungselementes verwendet werden, um Schlaufen zu bilden und das Schutzelement so an dem Pflock oder den Pflöcken zu befestigen. In einer als günstig angesehenen Weiterbildung wird das Schutzelement vor Ort mit wenigstens einem aus einem biologisch vollständig abbaubaren Kunststoffmaterial gebildeten Befestigungsmittel, insbesondere einem Kabelbinder, am Pflock befestigt.

Der Pflock kann sowohl innerhalb als auch außerhalb des Schutzelementes bzw. des zylindrischen Körpers angeordnet werden.

Die einzelnen Merkmale können je einzeln für sich oder zu mehreren in beliebiger Kombination bei einer Variante der Erfindung verwirklicht sein. Bevorzugte Ausführungsformen der Erfindung werden nachfolgend anhand der beigefügten Zeichnungen näher erläutert. Es zeigt
- **Fig. 1**: ein erfindungsgemäßes Schutzelement in perspektivischer Darstellung,
- **Fig. 1a**: eine weitere Ausführungsform des erfindungsgemäßen Schutzelementes im Verwendungszustand in perspektivischer Darstellung,
- **Fig. 1b**: eine weitere Ausführungsform des erfindungsgemäßen Schutzelementes im Verwendungszustand in perspektivischer Darstellung,
- **Fig. 2**: eine weitere Ausführungsform des erfindungsgemäßen Schutzelementes im Verwendungszustand in perspektivischer Darstellung,
- **Fig. 3**: eine Ausführungsform des zur Bildung des erfindungsgemäßen Schutzelementes verwendbaren Holzfurniers,
- **Fig. 4**: eine weitere Ausführungsform des erfindungsgemäßen Schutzelementes im Verwendungszustand jeweils in Draufsicht.

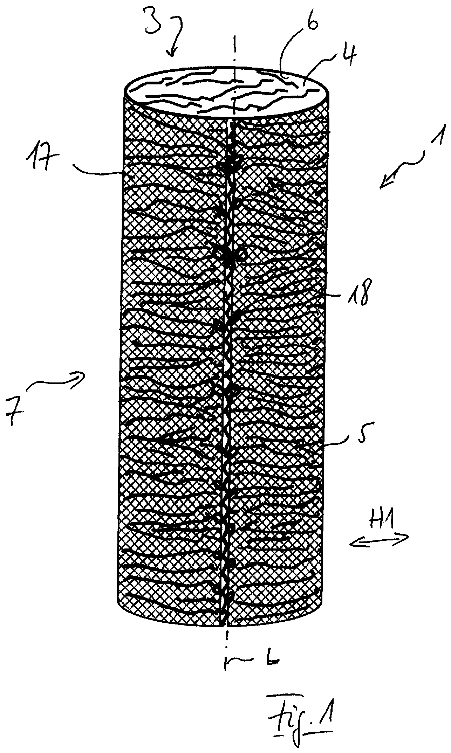

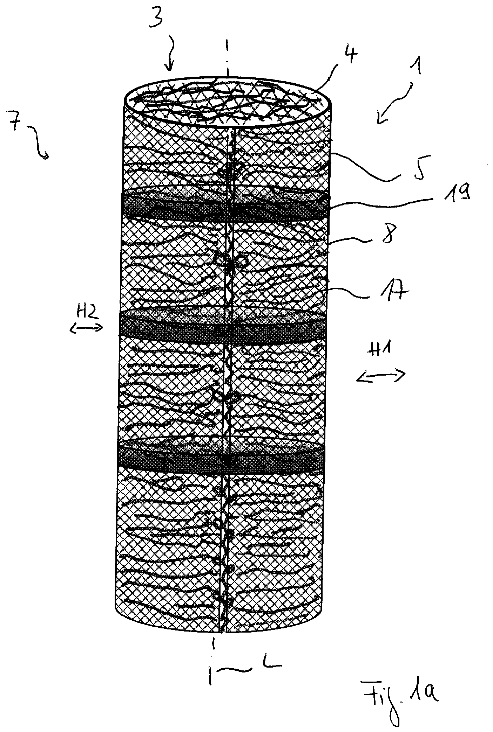

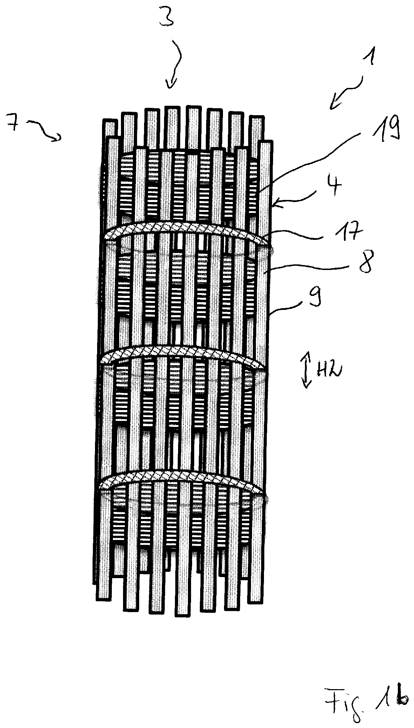

Fig. 1 zeigt die einfachste Ausführungsform eines Schutzelementes 1 gemäß der Erfindung. Das Schutzelement 1 ist aus einem Holzfurnier 5 gebildet und verfügt über einen zylindrischen Körper 7 der eine einen Aufnahmeraum 3 für eine Pflanze definierende Wandung 4 aufweist. Der zylindrische Körper 7 bildet dabei ein Rohr aus. Die Wandung 4 schützt die Pflanze vor dem Zugriff durch Wild und vor mechanischen Beschädigungen. Das dargestellte Schutzelement 1 ist aus einem einzigen zylindrisch verformten Holzfurnier 5 gebildet. Das die Wandung 4 bildende Holzfurnier 5 weist eine Hauptfaserrichtung H1 auf, die im Wesentlichen senkrecht zu einer Längsachse L des zylindrischen Körpers 7 ausgerichtet ist. Diese Ausrichtung der Fasern verzögert das Aufsteigen von Feuchtigkeit in die Wandung 4 und verbessert damit die Dauerhaftigkeit über die gesamte Nutzungsdauer hinweg. Die Faserausrichtung in Hauptfaserrichtung H im Holzfurnier 5 erleichtert zudem das Aufrollen des Furniers 5 zur Bildung der Wandung 4, da eine Rissbildung im Furniermaterial signifikant reduziert wird. Alternativ können selbstverständlich auch Holzfurniere 5 verwendet werden, deren Hauptfaserrichtung H im Wesentlichen parallel zur Längsachse L des zylindrischen Körpers 7 ausgerichtet ist.

Auf der dem Aufnahmeraum 3 zugewandten Innenseite 6 der Wandung 4 ist im Ausführungsbeispiel der Figur 1 ein vollflächiges Verbindungselement 17 vorgesehen. Diese ist im Ausführungsbeispiel als netzartige Materiallage ausgebildet und mit der Innenseite 6 stoffschlüssig verbunden, im Ausführungsbeispiel mit dieser verleimt. Das Verbindungselement 17 unterstützt zum einen die Haltbarkeit des Schutzelementes 1 und wirkt sich beim Aufrollen des Holzfurniers 5 stabilisierend auf die Struktur des Holzes aus, da es beispielsweise einer Rissbildung entgegengewirkt wird und in der Holzstruktur auftretende Spannungen abträgt.

Das Holzfurnier 5 des in Figur 1 gezeigten Schutzelementes 1 spannt damit das gesamte Schutzelement 1 aufgrund der Eigenspannung des Furniermaterials auf und steift es aus.

Das Verbindungselement 17 weist im gezeigten Ausführungsbeispiel bezüglich eines Umfangs des zylindrischen Körpers 7 ein Übermaß mit im dargestellten Schutzelement 1 zehn überstehenden Bereichen 18 auf. Die überstehenden Bereichen 18 werden zum Fixieren einer Zylinderform des zylindrischen Körpers 7 verwendet, und können miteinander verbunden, beispielsweise verknotet werden.

Figur 1a zeigt eine weitere Ausführungsform eines Schutzelementes 1 gemäß der Erfindung. Das Schutzelement 1 ist ebenfalls aus einem Holzfurnier 5 gebildet und verfügt über einen zylindrischen Körper 7 der eine einen Aufnahmeraum 3 für eine Pflanze definierende Wandung 4 aufweist. Der zylindrische Körper 7 bildet dabei ein Rohr aus. Die Wandung 4 schützt die Pflanze vor dem Zugriff durch Wild und vor mechanischen Beschädigungen. Das dargestellte Schutzelement 1 ist aus einem einzigen zylindrisch verformten Holzfurnier 5 gebildet. Das die Wandung 4 bildende Holzfurnier 5 weist eine Hauptfaserrichtung H1 auf, die im Wesentlichen senkrecht zu einer Längsachse L des zylindrischen Körpers 7 ausgerichtet ist. Diese Ausrichtung der Fasern verzögert das Aufsteigen von Feuchtigkeit in die Wandung 4 und verbessert damit die Dauerhaftigkeit über die gesamte Nutzungsdauer hinweg. Die Faserausrichtung in Hauptfaserrichtung H im Holzfurnier 5 erleichtert zudem das Aufrollen des Furnierblattes 5 zur Bildung der Wandung 4, da eine Rissbildung im Furniermaterial signifikant reduziert wird. Alternativ können selbstverständlich auch Holzfurniere 5 verwendet werden, deren Hauptfaserrichtung H1 im Wesentlichen parallel zur Längsachse L des zylindrischen Körpers 7 ausgerichtet ist. Die Hauptfaserrichtung H1 im Material der Wandung kann natürlich auch im Wesentlichen parallel zu einer Längsachse L des zylindrischen Körpers 7 ausgerichtet sein. Beide Varianten sind von der Erfindung umfasst.

Anders als in der Ausführungsform gemäß Fig. 1 ist hier auf der vom Aufnahmeraum 3 abgewandten Außenseite 8 der Wandung 4 das vollflächige Verbindungselement 17 vorgesehen. Diese ist im Ausführungsbeispiel als netzartige Materiallage ausgebildet und mit der Außenseite 8 stoffschlüssig verbunden, im Ausführungsbeispiel mit dieser verleimt. Das Verbindungselement 17 unterstützt zum einen die Haltbarkeit des Schutzelementes 1 und wirkt sich beim Aufrollen des Holzfurniers 5 stabilisierend auf die Struktur des Holzes aus, da es beispielsweise einer Rissbildung entgegengewirkt wird und in der Holzstruktur auftretende Spannungen abträgt.

Im Ausführungsbeispiel der Fig. 1a sind zusätzlich Aufspannelemente 19 im zylindrischen Körper 7 eingebracht. Das Aufspannelement 19 ist als ein eine definierte Rückstellkraft aufweisender, reversibel verformbarer, geschlossener Ring aus einem Furnierstreifen ausgebildet. Das Aufspannelement 19 wurde als flächiger, zu einem Ring verformbarer und aus einem Holzfurnier ausgebildeter Abschnitt zur Verfügung gestellt. Dieser Abschnitt weist im Holzmaterial eine Hauptfaserrichtung H2 auf, die im Wesentlichen senkrecht zu einer Längsachse L des zylindrischen Körpers 7 verläuft. Die Hautfaserrichtung H2 ist bevorzugt querlaufend ausgerichtet. Bei der Verformung des Abschnittes zu einem Ring oder Reif weist dieser aufgrund der Faserausrichtung die Bestrebung auf, in die flächige Form zurückzustellen. Über die dabei wirkenden Kräfte wird die Aufspannung des Aufspannelementes 19 erreicht und der zylindrischer Körper 7 in seiner Form zusätzlich stabilisiert und ausgesteift.

Figur 1b zeigt eine weitere Ausführungsform eines Schutzelementes 1 gemäß der Erfindung. Das Schutzelement 1 ist aus Holzfurnierstreifen 9 gebildet und verfügt ebenfalls über einen zylindrischen Körper 7 der eine einen Aufnahmeraum 3 für eine Pflanze definierende Wandung 4 aufweist. Der zylindrische Körper 7 bildet dabei ein Rohr mit durchbrochener bzw. geschlitzter Wandung 4 aus. Die Wandung 4 schützt die Pflanze vor dem Zugriff durch Wild und vor mechanischen Beschädigungen. Die Abstände zwischen den Holzfurnierstreifen 9 erlauben einen sehr guten Lichteinfall, der das Pflanzenwachstum begünstigt. Gleichzeitig sind die Abstände so gewählt, dass Wild keinen Zugriff auf die geschützte Pflanze erhält. Das dargestellte Schutzelement 1 ist aus mehreren Holzfurnierstreifen 9 gebildet, die über mehrere Verbindungselemente 17 miteinander verbunden sind. Das Verbindungselement 17 ist dabei auf der Außenseite 8 des zylindrischen Körpers 7 aufgebracht. Die die Wandung 4 bildenden Holzfurnierstreifen 9 weisen eine Hauptfaserrichtung H2 auf, die im Wesentlichen parallel zu einer Längsachse L des zylindrischen Körpers 7 ausgerichtet ist. Da hier allerdings keine nennenswerte Biegekraft in die Holzfurnierstreifen 9 eingetragen wird, bestehen keine erhöhten Anforderungen an die Hauptfaserrichtung H2. Alternativ zu den hier aus einem Holzfurnier gebildeten Streifen können auch Streifen oder Lamellen aus Holz oder einem Holzwerkstoff verwendet werden. Auch die Verwendung einfacher Äste oder Zweige ist denkbar und von der Erfindung umfasst.

Wie im Zusammenhang mit der der Ausführungsform gemäß Fig. 1a beschrieben, weist auch die hier gezeigte Ausführungsform zusätzliche ringförmige Aufspannelemente 19 im zylindrischen Körper 7 auf, die in der im Zusammenhang mit Fig. 1a beschriebenen Art und Weise erstellt wurden. Anders als in Fig. 1a und 1b dargestellt muss das Aufspannelement 19 nicht notwendigerweise als Vollring oder Reif ausgebildet sein, Teilringe bzw. Teilreife die nur an einen Umfangsbereich innenseitig an der Wandung 4 angebracht sind, sind zum Erreichen der erfindungsgemäßen Funktion ebenfalls verwendbar. Das Aufspannelement 19 bewirkt aufgrund seiner Rückstellkraft die Aufspannung des zylindrischen Körpers 7 und dessen Stabilisierung und Aussteifung, das Verbindungselement 17 trägt einen Gegendruck ein. Im Wesentlichen klemmen Aufspannelement 19 und Verbindungselement 17 die Wandung zwischen sich ein.

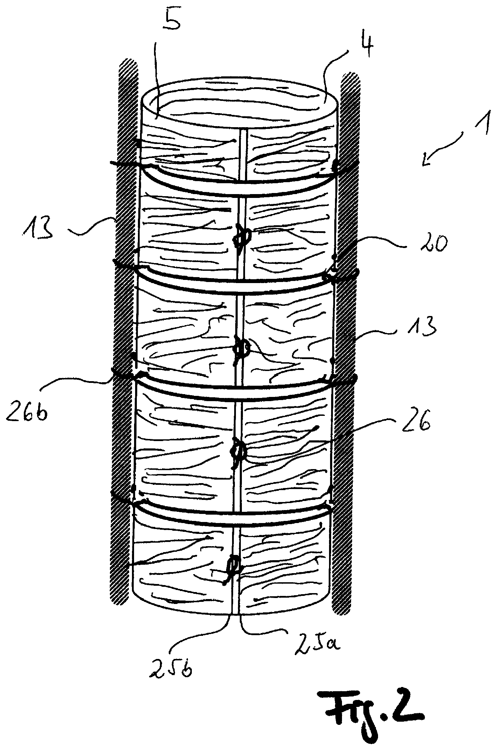

Figur 2 zeigt ebenfalls eine einfache Ausführungsform des erfindungsgemäßen Schutzelementes 1. Statt einer auf der Wandung 4 innenseitig aufgebrachten Materiallage als Verbindungselement 17 sind hier Ringe 20 als Verbindungselemente 17 vorgesehen, die auf den aus dem aufgerollten Holzfurnier 5 gebildeten Zylinder aufgesteckt wurden und diesen so stabilisieren. Die beim Aufrollen des Holzfurniers 5 aneinanderstoßende Längsseiten 25a, 25b sind im Ausführungsbeispiel der Figur 2 über am Holzfurnier 5 angeordnete Schnurabschnitte 26a verbunden. An den Ringen 20 sind ebenfalls Schnurabschnitte 26b vorgesehen, die dazu dienen das Schutzelement 1 mit zwei diametral gegenüberliegend angeordneten und in den Boden einsenkbaren Pflöcken 13 zu verbinden. Hierüber kann das Schutzelement 1 am Verbauungsort eingebaut werden. Zusätzlich zu den außenseitigen Verbindungselementen 17, können auch hier Aufspannelemente 19 im Innern des zylindrischen Körpers 7 eingebracht werden (nicht dargestellt).

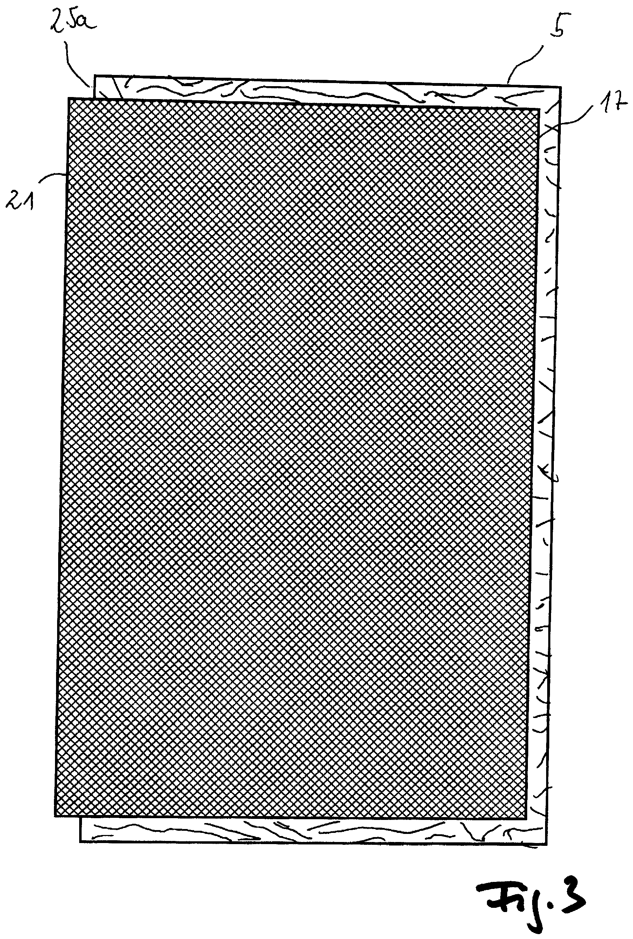

Figur 3 zeigt eine Ausführungsform eines Holzfurniers 5 mit einem Verbindungselement 17 in Form einer auf das Holzfurnier 5 aufkaschierter Materiallage. Diese ist netzartig ausgebildet und bedeckt die Oberfläche des Holzfurniers 5 nahezu vollflächig. Die Materiallage bildet im Ausführungsbeispiel der Figur 3 das Verbindungselement 17 und ist in Form eines aus einem Textilmaterial gebildeten Netzes ausgeführt. An einer Längsseite 25a des Holzfurniers 5 steht die Materiallage gegenüber dem Holzfurnier 5 über und stellt einen Bereich 21 zur Verfügung, der im aufgerollten und das Schutzelement 1 bzw. dessen zylindrischen Körper 7 bildenden Zustand dazu verwendet wird, die Form des Zylinders zu fixieren.

Alternativ zur hier dargestellten Ausführung mit vollflächigem Verbindungselement 17 kann dieses auch als einzelnes Band oder in mehreren Streifen zur Verfügung gestellt werden. Auch ist nicht zwingend eine vollflächig stoffschlüssige Verbindung mit dem Holzfurnier 5 notwendig. Ein punktueller oder ebenfalls streifenförmiger Auftrag eines Klebemittels kann einen ausreichende Stoffschluss zur Verfügung stellen. Es besteht auch die Möglichkeit, die Bänder oder Streifen durch Klammern oder in sonstiger geeigneter Art und Weise mit dem Material der Wandung 4 zu verbinden. Statt eines vollflächigen Holzfurniers 5 können auch hier Holzfurnierstreifen 9 verwendet werden, die voneinander beanstandet mit den Bändern oder Streifen verbunden sind. Hieraus entsteht dann ein Schutzelement 1 wie in Fig. 1b dargestellt.

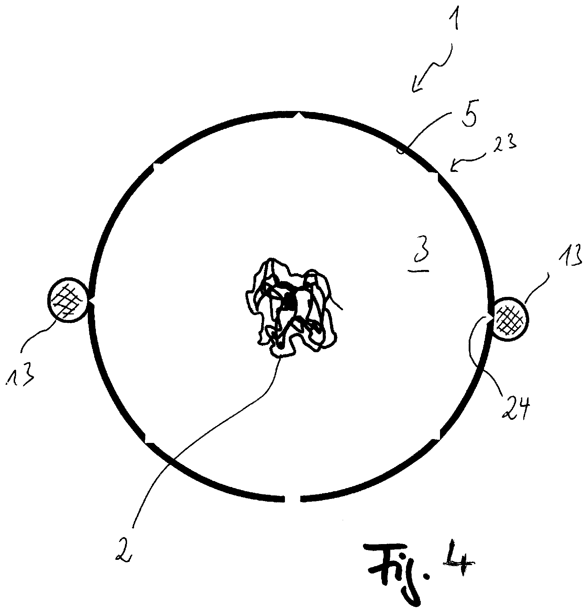

Figur 4 zeigt eine Ausführungsform des Schutzelementes 1, bei dem stärkere Furniere zur Herstellung verwendet wurden. Das Holzfurnier 5 weist mehrere Faltungskanten 23 auf, an denen das Holzfurnier 5 geschwächt oder eingekerbt ist und an denen das Holzfurnier 5 zur Bildung eines zylindrischen, rohrförmigen Körpers biegbar ist. Die Faltungskanten 23 sind in Form v-förmiger Nuten 24 in das Furniermaterial eingebracht und erstrecken sich quer zur Hauptholzfaserrichtung H1, somit parallel zur Längsachse L des zylindrischen Körpers. Die Fixierung in der zylindrischen Form erfolgt in einer wie zuvor beschriebenen Weise. Auch können zusätzlich Aufspannelemente 19 eingebracht werden, die jedoch in Figur 4 nicht gezeigt werden. Alternativ zur in Figur 4 können selbstverständlich auch mehrere Holzfurnierstreifen 9 nebeneinander liegend angeordnet werden. Diese ermöglichen dann den segmentierten Aufbau des zylindrischen Körpers 7 bzw. von dessen Wandung 4. Die Segmente werden zunächst flächig miteinander verbunden und zur Bildung des zylindrischen, insbesondere rohrförmigen Körpers 7 anschließend aufgerollt. Zur flächigen Ausbildung werden die Segmente mit einem Verbindungselement 17, ausgebildet als bandförmig, streifenförmig, netzartig oder flächig ausgebildete Materiallage, verbunden. Im Innern des Schutzelementes 1 werden ebenfalls die zuvor bereits beschriebenen Aufspannelemente 19 eingebaut. Alternativ zu den hier beschriebenen Holzfurnierstreifen 9 können auch in dieser Ausführungsform Streifen aus einem Holz oder Holzwerkstoffmaterial verwendet werden, um die Wandlung des zylindrischen Körpers 7 zu bilden.

Das in Figur 4 dargestellte Schutzelement 1 ist ebenfalls mit zwei Pflöcke 13 verbunden und schützt eine vom gebildeten Aufnahmeraum umschlossene Pflanze 2. Selbstverständlich ist in allen gezeigten Ausführungsbeispiel die Verwendung nur eines einzelnen Pflockes 13 oder mehrerer Pflöcke 13 möglich. Beide Varianten sind von der Erfindung umfasst.

### Bezugszeichenliste

- 1: Schutzelement
- 3: Aufnahmeraum
- 4: Wandung
- 5: Holzfurnier
- 6: Innenseite
- 7: zylindrischer Körper
- 8: Außenseite
- 9: Holzfurnierstreifen
- 13: Pflock
- 17: Verbindungselement
- 18: überstehender Bereich
- 19: Aufspannelement
- 20: Ring
- 21: Bereich
- 23: Faltungskante
- 24: Nut
- 25a, 25b: Längsseite
- 26a: Schnurabschnitt
- H1, H2: Hauptfaserrichtung
- L: Längsachse

## Patentansprüche

1. Schutzelement (1) zur Aufnahme einer Pflanze (2), insbesondere Holzpflanzen, wobei das Schutzelement (1) als im Wesentlichen zylindrischer Körper mit einer einen Aufnahmeraum (3) für die Pflanze definierenden Wandung (4) ausgebildet ist, die Wandung (4) aus einem zylindrisch verformbaren oder verformten Holzfurnier (5) oder aus verbundenen Holzfurnierstreifen (9) oder aus Holz, einem Holzwerkstoff oder einem anderen biologisch abbaubaren Material gebildet ist, **dadurch gekennzeichnet, dass** auf einer dem Aufnahmeraum (3) zugewandten Innenseite (6) der Wandung (4) wenigstens ein Aufspannelement (19) und auf einer vom Aufnahmeraum (3) abgewandten Außenseite (8) der Wandung (4) wenigstens ein Verbindungselement (17) vorgesehen ist, über die eine zylindrische Form des Schutzelementes definierbar ist.

2. Schutzelement (1) nach Anspruch 1, **dadurch gekennzeichnet, dass** das Aufspannelement (19) auf die Innenseite (6) der Wandung einen nach außen gerichteten Druck und das Verbindungselement (17) auf die Außenseite (8) der Wandung einen zur Innenseite (6) gerichteten Gegendruck in die Wandung einträgt.

3. Schutzelement (1) nach Anspruch 1 oder 2, **dadurch gekennzeichnet, dass** das Aufspannelement (19) als ein eine definierte Rückstellkraft aufweisender, reversibel verformbare Ring, Teilring, Reif oder Teilreif ausgebildet ist.

4. Schutzelement (1) nach Anspruch 1 oder 2, **dadurch gekennzeichnet, dass** das Aufspannelement (19) als flächiger, zu einem Ring, Teilring, Reif oder Teilreif verformbarer, aus einem Holzfurnier oder Holzwerkstoff ausgebildeter Abschnitt ausgebildet ist, wobei der Abschnitt im Holzmaterial insbesondere eine Hauptfaserrichtung (H) aufweist und die Hauptfaserrichtung (H) im Wesentlichen senkrecht zu einer Längsachse (L) des zylindrischen Körpers, bevorzugt querlaufend ausgerichtet ist.

5. Schutzelement (1) nach Anspruch 1 oder 2, **dadurch gekennzeichnet, dass** das Aufspannelement (19) als flächiger Abschnitt aus einem vorzugsweise biodegradierbaren Kunststoff- oder Metallmaterial ausgebildet ist.

6. Schutzelement (1) nach einem der vorhergehenden Ansprüche, **dadurch gekennzeichnet, dass** das Aufspannelement (19) bevorzugt kraft- oder stoffschlüssig mit dem Holzfurnier (5), den Holzfurnierstreifen (9), dem Holz oder Holzwerkstoff oder dem anderen biologisch abbaubaren Material der Wandung (4) verbindbar, insbesondere verklammerbar, verschraubbar, steckbar verbunden, aufklebbar, aufleimbar oder aufkaschierbar ist.

7. Schutzelement (1) nach einem der vorhergehenden Ansprüche, **dadurch gekennzeichnet, dass** das Verbindungselement (17) insbesondere aus einer bevorzugt band-, streifenförmigen oder flächigen Faser- oder Textilmatte oder einem Netz gebildet ist und/oder das Verbindungselement (17) ringförmig ausgebildet ist.

8. Schutzelement (1) nach Anspruch 7, **dadurch gekennzeichnet, dass** das Verbindungselement (17) als bandförmig, streifenförmig, netzartig oder flächig ausgebildete Materiallage zur Verfügung gestellt wird und bevorzugt kraft- oder stoffschlüssig mit dem Holzfurnier (5), den Holzfurnierstreifen (9), dem Holz oder Holzwerkstoff oder dem anderen biologisch abbaubaren Material der Wandung (4) verbindbar, insbesondere verklammerbar, verschraubbar, steckbar verbunden, aufklebbar, aufleimbar, aufkaschierbar oder eingewebt ist.

9. Schutzelement (1) nach einem der vorhergehenden Ansprüche, **dadurch gekennzeichnet, dass** die Wandung (4) aus mehreren beabstandet nebeneinander liegend angeordneten Holzfurnierstreifen (9) gebildet ist, wobei die Holzfurnierstreifen (9), insbesondere über das Verbindungselement (17) und/oder das Aufspannelement (19), miteinander verbunden sind.

10. Schutzelement (1) nach einem der vorhergehenden Ansprüche, **dadurch gekennzeichnet, dass** das Aufspannelement (19) und/oder das Verbindungselement (9) bezüglich eines Umfangs des zylindrischen Körpers (7) ein Übermaß mit wenigstens einem überstehenden Bereich (21) aufweist und der überstehende Bereich (21) zum Fixieren einer Zylinderform des zylindrischen Körpers (7) und/oder dessen Anordnung an einem Haltemittel für das Schutzelement (1) verwendbar ist.

11. Schutzelement (1) nach einem der vorhergehenden Ansprüche, **dadurch gekennzeichnet, dass** der zylindrische Körper (7) durch Aufrollen des der Wandung (4) unter Ausbildung des Aufnahmeraums (3) erstellbar ist, wobei die aufgerollte Wandung (4) bevorzugt über vorstehende Bereiche (21) des Verbindungselementes (17) oder gesondert zur Verfügung gestellte Verbinder in der zylindrischen Form fixierbar ist und/oder wenigstens ein ringförmig ausgeformter Verbinder vorgesehen sind, der auf den zylindrischen Körper (7) aufsteckbar ist.

12. Schutzelement (1) nach einem der vorhergehenden Ansprüche, **dadurch gekennzeichnet, dass** der zylindrische Körper (7) einen Durchmesser von zwischen 9 cm und 50 cm, insbesondere 11 cm bis 25, bevorzugt von 14 cm bis 16 cm aufweist.

13. Schutzelement (1) nach einem der vorhergehenden Ansprüche, **dadurch gekennzeichnet, dass** das Holzfurnier (5) eine oder mehrere Faltungskanten (10) aufweist, an denen das Holzfurnier (5) geschwächt, eingekerbt oder gestanzt ist und an denen das Holzfurnier (5) falt- oder biegbar ausgebildet ist, wobei die Faltungskanten (10) bevorzugt als v-förmige Nuten ausgebildet sind und/oder die Nuten quer zu einer Hauptfaserrichtung (H1) eingebracht werden.

14. Schutzelement (1) nach einem der vorhergehenden Ansprüche, **dadurch gekennzeichnet, dass** der zylindrische Körper (7) eine Länge von zwischen 0,4 m und 2 m, bevorzugt 0,5 m bis 1,5 m aufweist.

15. Schutzelement (1) nach einem der vorhergehenden Ansprüche, **dadurch gekennzeichnet, dass** die Anordnung des Schutzelementes (1) an wenigstens einem benachbart zur Pflanze (2) in den Boden eingesenkten Pflock (13) vorgesehen ist und zur Befestigung des Schutzelementes (1) am Pflock (13) ein an dem zylindrischen Körper (7) vorgesehenes oder anordenbares zusätzliches Verbindungselement (17) vorgesehen ist oder von dem Verbindungselement (17) gebildet oder durch dieses zur Verfügung gestellt wird.
